## Europäisches Patentamt
## European Patent Office
## Office européen des brevets

(19)

(11) Publication number: **0 170 468**
**B1**

(12) **EUROPEAN PATENT SPECIFICATION**

(45) Date of publication of patent specification: **18.01.89**

(51) Int. Cl.⁴: $H\ 01\ C\ 7/00$, $H\ 01\ C\ 17/06$

(21) Application number: **85305083.9**

(22) Date of filing: **17.07.85**

(54) Resistor compositions, methods of making them and articles comprising them.

(30) Priority: **18.07.84 US 631975**

(43) Date of publication of application:
**05.02.86 Bulletin 86/06**

(45) Publication of the grant of the patent:
**18.01.89 Bulletin 89/03**

(84) Designated Contracting States:
**AT BE CH DE FR GB IT LI LU NL SE**

(56) References cited:
**EP-A-0 143 660**
**US-A-1 771 236**
**US-A-1 910 391**
**US-A-3 686 139**

**CHEMICAL ABSTRACTS, vol. 83, no. 2, 14th July 1975, abstract no. 20684t, Columbus, Ohio, US**

(73) Proprietor: **ELECTRO MATERIALS CORP. OF AMERICA**
**605 Center Avenue**
**Mamaroneck New York 10543 (US)**

(72) Inventor: **Martin, Frank Wayne**
**P. O. Box 243**
**Baldwin Place New York 10505 (US)**
Inventor: **Shahbazi, Samson**
**68 Highland Avenue**
**Yonkers New York 10705 (US)**

(74) Representative: **Angell, David Whilton**
**ROHM AND HAAS (UK) LTD. European Operations Patent Department Lennig House 2 Mason's Avenue**
**Croydon CR9 3NB (GB)**

Courier Press, Leamington Spa, England.

## Description

This invention is concerned with resistor compositions. More specifically this invention is concerned with resistor compositions comprising organic resin having a mixture of carbon black and graphite particles dispersed therein, to methods of forming said resistor compositions on substrates, and to articles coated with said resistor compositions.

Resistor elements which comprise a dispersion of finely divided conductive particles in a solid dielectric, for example, a polymerized resin, are well known in the prior art. Generally, these resistors comprise a dispersion of finely divided carbon or metal particles in a solid resinous material which may additionally contain various organic or inorganic filler materials. The resins that are used in the production of such resistors may be of either a thermosetting or thermoplastic nature depending upon the specific requirement of a particular installation. Natural resins as well as synthetic resins such as phenolic condensation products, alkyl resins, and vinyl resins have been used in the manufacture of resistors.

Many different heat curable polymeric materials have been used to produce resistive coatings. Among these most commonly used are phenyl-formaldehyde condensates and difunctional epoxy resins.

U.S. Patent 3,056,750 discloses a resistor comprising discrete units dispersed in one or more solid resinous dielectric materials. Each one of these discrete units comprises an aggregate of conductive particles which have been precoated, at least in part, with one or more dielectric materials which subsequently may be polymerized so as to bind the individual conductive particles together to form the aggregate or unit.

U.S. Patent 3,328,317 discloses resistor compositions that combine phenolic resins and silicone resins to from dielectric binders.

U.S. Patent 3,686,139 discloses an electrically resistive composition which comprises an admixture of a selected heat-curable polymeric material and conductive particles. These selected polymeric materials include mixtures of trifunctional epoxy resin and phenolic resin; mixtures of epoxy-modified phenolic resin and phenolic resin; mixtures of phenolic resin, melamine resin or precursors thereof, and epoxy-modified phenolic resin; mixtures of epoxy modified phenolic resin, phenolic resin, and epoxy resin; and melamine resins.

EP—A—0143660 to be considered under Art. 54(3) EPC discloses a resistor compositions comprising carbon particles embedded in a matrix formed from short chain-length phenolic resin, long chain-length phenolic resin, and, optionally, filler. The resistor compositions may be formulated as either low, medium or high resistance resistor compositions depending on the type and proportion of carbon material and phenolic resin employed, in addition to whether or not filler is present.

In electrical and electronic circuits, it is highly desirable that the electrical values (i.e. resistivity) of the various circuit components remain constant within close limits, despite wide changes in such operating conditions as the humidity and temperature which the device may encounter in use. Changes in resistance may cause malfunction of the circuit.

Prior art compositions are generally deficient in that they are generally susceptible to changes in resistivity under conditions of changing relative humidity. Furthermore, resistor compositions that are capable of low ohmic values without metal being a component of the resistor compositions, have not been produced.

US—A—1,771,236 discloses compositions suitable for use in the formation of moisture—resistant resistance strips, the compositions comprising substantially equal proportions of lamp black and graphite and a binder comprising a shellac solution.

It has, for a long time been desired to provide resistor compositions that are reliable under a wide variety of working conditions, for example, conditions of high relative humidity, and to provide low resistance resistors without needing to resort to the use of metals. Low resistance resistors are currently available; however, these compositions typically contain precious metals and as such are expensive.

The present invention may enable the provision of resistor compositions that are capable of withstanding high humidity conditions without any significant change in resistivity, do not contain metal, and/or are capable of low ohmic values.

According to one aspect of the present invention there is provided a composition of matter for a resistor capable of withstanding high humidity conditions comprising (A) resin and (B) carbonaceous material, characterised in that:

(A) is a one-step heat-reactive resin system comprising liquid phenolic resin having a number average molecular weight of from 300 to 400, and solid phenolic resin having a number average molecular weight of from 400 to 500; and

(B) is a mixture of carbon black and graphite particles, said mixture being dispersed in said resin system.

According to a further aspect of the present invention there is provided a method of forming, on a substrate, a composition according to the invention comprising:

(i) dissolving solid phenolic resin having a number average molecular weight of from 400 to 500 in solvent to form a solution;

(ii) mixing said solution with liquid phenolic resin having a number average molecular weight of from 300 to 400;

(iii) dispersing a mixture of carbon black and graphite particles in the solution to form a mixture;

(iv) applying the mixture to a substrate, by silk screening; and

(v) curing the mixture, e.g. at a temperature of from about 150°C to 165°C from about 60 to about 120 minutes.

For convenience, the compositions of the present invention are often referred to herein as "resistor compositions".

The resistor coating compositions of the present invention conveniently contain finely divided, electrically conductive particles dispersed throughout a substantially non-conductive, heat-curable polymeric vehicle. The polymeric vehicle is capable of adhering to a substrate, e.g. dielectric substrate and providing a hard solid matrix in which the conductive particles remain dispersed after curing at elevated temperatures.

The resistor compositions of the present invention comprise (A) a resin system comprising a liquid short chain phenolic resin (i.e. phenolic resin which is liquid at room temperature and has a number average molecular weight of from 300 to 400, solid long chain phenolic resin (i.e. phenolic resin which is solid at room temperature and has a number average molecular weight of from 400 to 500), and (B) a mixture of carbon black and graphite particles dispersed in said resin system.

The resin system comprising liquid short chain and solid long chain phenolic resins is a one step heat reactive system; that is, the resin system is stable at room temperature but readily crosslinks upon heating. Two step novolac phenolic resin systems, which must be pre-reacted to render them capable of being crosslinked, are unsuitable for formulating the compositions of the present invention. Typically, these two stage novolac resin systems have a number average molecular weight of greater than 500.

Liquid short chain phenolic resins suitable for use in the present invention include, for example, phenol-formaldehyde resins such as that sold by Clark Chemical Corporation under the designation CR 3558, and the phenolic resin sold by Union Carbide Corporation under the designation BKR 2620. Preferably the uncured resistor compositions contain 1% to 20% by weight liquid phenolic resin based on the weight of the liquid and solid phenolic resins, carbon black, graphite and solvent.

Long chain phenolic resins suitable for use in the present invention include, for example, phenol-formaldehyde resins such as the resin sold by Union Carbide Corporation under the designation BLS 2700, and the phenolic resin sold by Reichhold Chemical, Inc. under the designation VARCUM 29—112. The uncured resistor compositions of the invention preferably contain 30% to 50% by weight solid phenolic resin, based on the weight of the liquid and solid phenolic resins, carbon black, graphite and solvent.

The weight ratio of liquid short chain phenolic resin to solid long chain phenolic resin may, for example, be from about 1:1 to about 100:1, preferably from about 2:1 to about 3:1. Additionally, the weight ratio of the resin system to the mixture of carbon black and graphite particles may, for example, be from about 85:15 to about 50:50, preferably from about 82:18 to about 78:22.

The resin system and the carbon black-graphite mixture are conveniently prepared separately and then mixed together by any suitable means.

In the method according to the present invention, for forming a resistor composition capable of withstanding high humidity, any solvent capable of dissolving the solid long chain phenolic resin may be employed. The mixture comprising resin system, solvent, carbon black and graphite is often referred to as an ink and can be applied to a substrate by a variety of methods, for example, screen printing. Before application, however, the mixture is preferably checked for fineness of grind. The fineness of grind should preferably be less than 7 micrometers and, if this fineness of grind has not been obtained, the composition is preferably passed through a 3 roll mill set at 689.5 kPa gauge (100 p.s.i.g.) pressure until the desired fineness is obtained. The mixture, after application to the substrate, is cured. This may, for example, be accomplished by baking the mixture in an oven for about 60 to about 120 minutes at a temperature of from about 150°C to about 165°C. The composition so produced adheres well to the substrate and is ready for use.

The resin system may, for example, be prepared by first crushing the solid long chain phenolic resin into a fine powder. This crushed resin is then mixed and blended with solvent, typically butyl Carbitol acetate, until a lump free solution is achieved. Butyl Carbitol acetate is an ester solvent sold by Union Carbide. The liquid short chain phenolic resin can then be added and blended into the mixture. The resin system should have a Brookfield viscosity of 0.5 to 1.75 Pa s (500 cps to 1750 cps), measured using a Brookfield RVT Viscometer with a T.A. spindle. Preferably, the viscosity should be from 0.8 to 1.3 Pa s (800 to 1300 cps). If the viscosity is too high, it can be lowered by the addition of solvent is about 0.5% increments.

It is surprising that a mixture of low structure carbon black and graphite particles conforming to certain specifications may be used to achieve the objects of the present invention. Any type of carbon black or graphite having such specifications may be used. Preferably the carbon black is a highly electrically conductive, non-reinforcing furnace type carbon black. It is thought that the combination of using very fine particle sizes with very high surface areas is particularly suitable for achieving the unique characteristics of the compositions of the present invention. We have used a highly conductive low structure carbon black sold by Noury Chemical Corporation and designated Ketjenblack EC, this material being a highly electrically conductive non-reinforcing furnace type carbon black.

The carbon black preferably has a particle size distribution of from about 10 millimicrometres to about 100 millimicrometres, whereas the particle size distribution for the graphite should preferably be from about 1 micrometre to about 10 micrometres. The average particle size of the mixture of carbon black and graphite particles is preferbaly from about 1 micron to about 10 microns. It is important to understand that this range refers to the particle size distribution of the carbon black-graphite mixture before it is combined with the resin system; that is, immediately after any ball milling of the mixture.

Considering this particle size distribution, the surface area of the carbon black is preferably from about 500 to about 1500 $m^2/g$ and the surface area of the graphite is preferably from about 1 to about 2 $m^2/g$. Therefore, the ratio of the surface area of carbon black to graphite is preferably from about 500:1 to about 1500:1.

The weight ratio of carbon black to graphite that may be used is conveniently from about 10:90 to about 50:50.

Any suitable method may be employed to grind the carbon black and graphite to the desired specifications. We have used a procedure called ball-milling. Ball milling typically involves preparing the mixture of carbon black and graphite particles using varying proportions of each element depending upon the desired resistivity of the final composition. The carbon black and graphite particles are placed in a 7571 cm³ (2 gallon) ball mill which has been 1/2 filled with 1.27 cm (1/2") diameter Burundum balls. The ball mill is then filled to within 5.08 cm (two inches) of its orifice with liquid freon. After milling the fineness of grind of the resultant composition can be determined. As indicated, at this stage in the preparation of the composition, the fineness of grind should preferably be from about 1 to about 10 micrometres. The total milling time to achieve this fineness of grind should preferably be no more than two hours. After milling is complete the freon is removed, typically by distillation.

Fineness of grind may be measured by any standard technique. We have used a procedure whereby a sample of dried, ground powder is removed from the ball mill and mixed with a polymeric vehicle. Fineness of grind is then checked with a standard fineness of grind gauge. The polymeric vehicle we employed was based on ethyl cellulose and has the following formulation: 47.2% by weight decyl alcohol, 21% by weight ethyl cellulose, 30% by weight butyl Carbitol acetate and 1.8% by weight Stabilite.

The resin system and the mixture of carbon black and graphite particles can be mixed together by any suitable means as long as the powders are thoroughly wetted and dispersed. After this mixing, the dispersion is conveniently passed through a 3 roll mill, the rollers of which have been tightened to 689.5 kPa gauge (100 psig), and then the fineness of grind is checked. More passes through the 3 roll mill can be made if the fineness of grind of the dispersion at this point is not 7 micrometres or less. Electrical properties can be maximised if this fineness of grind is achieved. The composition so produced typically has an ohmic value of 708;7—5905.5 ohms/sq/ mm (18—150 ohms/sq/mil) cured, whereby ohms/ sq/mm means ohms per square per 1 mm thickness. If the resistance is greater than 5,905.5 ohms/sq/mm (150 ohms/sq/mil), ball milling should preferably be continued for an additional time period. However, the mixture should preferably not be ball milled for more than three hours.

The compositions of the present invention are capable of low ohmic values without any metal being present in the compositions. By low ohmic values is meant values lower than 5,905.5 ohms/ sq/mm (150 ohms/sq/mil), preferably between 708.7 and 4,724.4 ohms/sq/mm (18 and 120 ohms/ sq/mil), most preferably between 787.4 and 3,937 ohms/sq/mm (20 and 100 ohms/sq/mil). The resistance of the composition can be changed by varying the amounts used of carbon black and graphite and the liquid short chain and solid long chain phenolic resins.

The compositions of this invention are capable of withstanding high humidity conditions without displaying significant changes in resistivity. This represents a significant advantage over prior art compositions. Although tolerance levels of as much as ±10—20% are allowed with resistor compositions applied to printed circuit boards, compositions of the present invention are reliable to ±1.0% of their original resistivity value after being subjected to high humidity conditions. Changes in resistivity were measured under conditions of 85°C at 85% and 90% relative humidity for 250 hours.

The present invention will now be further illustrated by way of the following Examples which are for illustrative purposes only and which are not to be construed as imposing any limitation on the scope of the invention.

Example I
Method of making resin system
Solid long chain phenolic resin supplied by Union Carbide and designated B.K.R. 2620 and having a number average molecular weight of 500 was crushed into a fine powder using a mortar and pestle. This resin was then placed in a stainless steel mixing bowl and blended with butyl Carbitol acetate solvent until a clear lump-free solution was achieved. Liquid short chain phenolic resin supplied by Union Carbide and designated B.L.S. 2700 and having a number average molecular weight of 300 was then added to the solution and the total mixture blended for .two hours.

The total formulation of this mixture was as follows:

|  | by weight |
|---|---|
| Butyl Carbitol acetate | 41.66% |
| Solid Long chain phenolic resin | 41.66% |
| Liquid Short chain phenolic resin | 16.68% |

The resultant mixture was allowed to cool to 25°C. The viscosity was measured using a Brookfield R.V.T. Viscometer with a TA spindle and found to be 1 Pa s (1000 cps).

Example II
Preparation of the mixture of carbon black and graphite particles

A mixture of carbon black and graphite particles was prepared by mixing 800 grams of graphite powder with 200 grams of Ketjenblack EC powder. Ketjenblack EC powder is a highly conductive carbon black supplied by Noury Chemical Corporation of New York. A 7571 cm³ (two gallon) ball mill was half filled with 1.27 cm (half inch) diameter Burandum balls. The mixture of cabron black and graphite particles was then placed in the ball mill and the ball mill was then filled to within 5.08 cm (two inches) of its orifice with liquid freon. The mixture was then ball milled for one hour and thereafter removed from the ball mill and placed in a stainless steel pot for 24 hours to evaporate the liquid freon. The fineness of grain of the resulting composition was found to be 8 micrometres.

Example III
Method of making resistor composition [100 ohms]

40 grams of the resin system of Example 1 was hand mixed with 10 grams of the mixture of carbon black and graphite particles of Example II until the powders were thoroughly wetted and dispersed.

The mixture was contact milled four times at 689.5 kPa gauge (100 p.s.i.g.) and fineness of grind was checked and found to be 6 micrometres.

The resistance of the composition was 3,937 ohms/sq/mm (100 ohms/sq/mil).

Example IV
Resistor composition [50 ohms]

40 grams Ketjenblack EC powder and 60 grams graphite was ball milled according to Example II.

Fineness of grind was found to be 6 micrometres.

77 grams of the resin system of Example 1 was mixed with 23 grams of this Ketjenblack graphite mixture.

The composition was passed through a 3 roll mill until the fineness of grind was 6 micrometres. The composition was applied to a printed circuit board by silk screening and then dried and cured at 165°C for 60 minutes.

The resistance of the composition was 1968.5 ohms/sq/mm (50 ohms/sq/mil).

Example V
Resistor composition [30 ohms]

A resistor composition was prepared as described in Example IV, except that 69.1 grams of the resin system of Example 1 was hand mixed with 31.9% of the Ketjenblack EC-graphite mixture.

The composition was passed through a 3 roll mill until the fineness of grind was 6 micrometres. The composition was then applied to a printed circuit board by silk screening and then dried and cured at 165°C for 60 minutes.

The resistance of the composition was 1181.1 ohms/sq/mm (30 ohms/sq/mil).

Example VI
Resistor composition [18 ohms]

A resistor composition was prepared as in Example IV except that 35 grams of the resin system of Example 1 was mixed with 30 grams of the Ketjenblack EC powder-graphite mixture and 35 grams of butyl Carbitol acetate. The composition was applied to a printed circuit board using a doctor blade.

The resistance of the composition was found to be 708.7 ohms/sq/mm (18 ohms/sq/mil).

"Carbitol", "Stabilite" and "Ketjenblack" are trade marks which may be registered in some or all of the designated states.

Claims

1. A composition of matter for a resistor capable of withstanding high humidity conditions comprising (A) resin and (B) carbonaceous material, characterised in that:

(A) is a one-step heat-reactive resin system comprising liquid phenolic resin having a number average molecular weight of from 300 to 400, and solid phenolic resin having a number average molecular weight of from 400 to 500; and

(B) is a mixture of carbon black and graphite particles, said mixture being dispersed in said resin system.

2. A composition as claimed in claim 1, wherein:

(a) the weight ratio of (A) to (B) is from 85:15 to 50:50; and/or

(b) the weight ratio of carbon black to graphite is from 10:90 to 50:50; and/or

(c) the weight ratio of liquid phenolic resin to solid phenolic resin is from 1:1 to 100:1.

3. A composition as claimed in claim 1 or claim 2, wherein the average particle size of the carbon black particles is from 10 to 100 nanometer, and/or the average particle size of the graphite particles is from 1 micrometre to 10 micrometres.

4. A composition as claimed in claim 1 or claim 2, wherein the average particle size of the carbon black-graphite mixture is from 1 micrometre to 10 micrometres.

5. A composition as claimed in any of claims 1 to 4, wherein the surface area of the carbon black is from 500 m²/g to 1500 m²/g, and/or the surface area of the graphite is from 1 m²/g to 2 m²/g.

6. A composition as claimed in any of claims 1 to 5, wherein the weight ratio of the surface area of carbon black to graphite is from 500:1 to 1500:1.

7. A composition as claimed in any of claims 1 to 6 having a fineness of grind of from 1 micrometre to 7 micrometres.

8. A composition as claimed in any of claims 1 to 7 having an ohmic value of from 708.7 to 5905.5 ohms/sq/mm (18 to 150 ohms/ sq/mil).

9. A composition as claimed in any of claims 1 to 8 having an ohmic value which varies less than ±1.0% at 85% relative humidity.

10. A composition as claimed in any of claims 1 to 8 having a resistance value which varies less than +1.0% when the relative humidity varies from 80% to 90% at 85°C.

11. A method of forming, on a substrate, a composition as claimed in any of claims 1 to 10 characterized in that it comprises:

(i) dissolving solid phenolic resin having a number average molecular weight of from 400 to 500 in solvent to form a solution:

(ii) mixing said solution with liquid phenolic resin having a number average molecular weight of from 300 to 400:

(iii) dispersing a mixture of carbon black and graphite particles in the solution to form a mixture;

(iv) applying the mixture to a substrate, by silk screening; and

(v) curing the mixture, e.g. at a temperature of from about 150°C to 165°C from about 60 to about 120 minutes.

12. An article comprising a substrate, e.g. a printed circuit board, at least a portion of the surface of which is coated with a composition as claimed in any of claims 1 to 10.

**Patentansprüche**

1. Masse für einen Widerstand, die hohen Feuchtigkeitsbedingungen zu widerstehen vermag, aus (A) Harz und (B) kohlenstoffartigem Material, dadurch gekennzeichnet, daß

(A) ein wärmereaktives Einstufenharzsystem aus einem flüssigen Phenolharz mit einem Zahlenmittel des Molekulargewichts von 300 bis 400 und einem festen Phenolharz mit einem Zahlenmittel des Molekulargewichts von 400 bis 500 ist und

(B) ein Mischung aus Ruß- und Graphitteilchen ist, wobei die Mischung in dem Harzsystem verteilt ist.

2. Masse nach Anspruch 1, worin

(a) das Gewichtsverhältnis von (A) zu (B) 85:15 bis 50:50 und/oder

(b) das Gewichtsverhältnis von Ruß zu Graphit 10:90 bis 50:50 beträgt und/oder

(c) das Gewichtsverhältnis von flüssigem Phenolharz zu festem Phenolharz 1:1 bis 100:1 beträgt.

3. Masse nach Anspruch 1 oder 2, worin die durchschnittliche Teilchengröße der Rußteilchen 10 bis 100 Nanometer beträgt und/oder die durchschnittliche Teilchengröße der Graphitteilchen 1 Mikrometer bis 10 Mikrometer beträgt.

4. Masse nach Ansprüche 1 oder 2, worin die durchschnittliche Teilchengröße der Ruß/ Graphit-Mischung 1 Mikrometer bis 10 Mikrometer beträgt.

5. Masse nach einem der Ansprüche 1 bis 4, worin die Oberfläche des Rußes 500 m²/g bis 1500 m²/g und/oder die Oberfläche des Graphits 1 m²/g bis 2 m²/g beträgt.

6. Masse nach einem der Ansprüche 1 bis 5, worin das Gewichtsverhältnis der Oberfläche des Rußes zu derjenigen des Graphits 500:1 bis 1500:1 beträgt.

7. Masse nach einem der Ansprüche 1 bis 6 mit einem Vermahlungsgrad von 1 Mikrometer bis 7 Mikrometer.

8. Masse nach einem der Ansprüche 1 bis 7 mit einer Ohmzahl von 708,7 bis 5905,5 Ohm/ Quadrat/mm (18 bis 150 Ohm/Quadrat/mil).

9. Masse nach einem der Ansprüche 1 bis 8 mit einer Ohmzahl, die um weniger als ±1,0% bei 85% relativer Feuchtigkeit schwankt.

10. Masse nach einem der Ansprüche 1 bis 8 mit einem Widerstandwert, der um weniger als ±1% schwankt, wenn die relative Feuchtigkeit von 80 bis 90% bei 85°C variiert.

11. Verfahren zur Ausformung einer Masser gemäß einem der Ansprüche 1 bis 10 auf einem Substrat, dadurch gekennzeichnet, daß

(i) festes Phenolharz mit einem Zahlenmittel des Molekulargewichts von 400 bis 500 in einem Lösungsmittel unter Bildung einer Lösung aufgelöst wird,

(ii) die Lösung mit flüssigem Phenolharz mit einem Zahlenmittel des Molekulargewichts von 300 bis 400 vermischt wird,

(iii) die Mischung aus Ruß- und Graphitteilchen in der Lösung unter Bildung einer Mischung verteilt wird,

(iv) die Mischung auf ein Substrat durch Siebdruck aufgebracht wird und

(v) die Mischung beispielsweise bei einer Temperatur von ungefähr 150°C bis 165°C während ungefähr 60 bis ungefährt 120 Minuten gehärtet wird.

12. Gegenstand aus einem Substrat, beispielsweise ein gedruckten Schaltung, wobei wenigstens ein Teil der Oberfläche davon mit einer Masse gemäß einem der Ansprüche 1 bis 10 beschichtet ist.

**Revendications**

1. Une composition pour résistance capable de résister à des conditions de forte humidité, comprenant (A) une résine et (B) une matière carbonée, caractérisée en ce que:

(A) est un système de résines thermoréactif de type résol comprenant une résine phénolique liquide ayant un poids moléculaire moyen numérique de 300 à 400 et une résine phénolique solide ayant un poids moléculaire moyen numérique de 400 à 500, et

(B) est un mélange de particules de noir de carbone et de graphite, ce mélange étant dispersé dans ledit système de résine.

2. Une composition selon la revendication 1, dans laquelle:

(a) la rapport pondéral de (A) à (B) est de 85/15 à 50/50; et/ou

(b) le rapport pondéral du noir de carbone au graphite est de 10/90 à 50/50; et/ou

(c) le rapport pondéral de la résine phénolique liquide à la résine phénolique solide est de 1/1 à 100/1.

3. Une composition selon la revendication 1 ou la revendication 2, dans laquelle la granulométrie moyenne des particules de noir de carbone est de 10 à 100 nanomètres et/ou la granulométrie moyenne des particules de graphite est de 1 micromètre à 10 micromètres.

4. Une composition selon la revendication 1 ou la revendication 2, dans laquelle la granulométrie moyenne du mélange de noir de carbone et de graphite est de 1 micromètre à 10 micromètres.

5. Une composition selon l'une quelconque des revendications 1 à 4, dans laquelle la surface spécifique du noir de carbone est de 500 m²/g à 1 500 m²/g et/ou la surface spécifique du graphite et de 1 m²/g à 2 m²/g.

6. Une composition selon l'une quelconque des revendications 1 à 5, dans laquelle le rapport pondéral de la surface spécifique du noir de carbone à celle du graphite est de 500/1 à 1 500/1.

7. Une composition selon l'une quelconque des revendications 1 à 6 ayant une finesse de broyage de 1 micromètre à 7 micromètres.

8. Une composition selon l'une quelconque des revendications 1 à 7 ayant une valeur ohmique de 708,7 à 5 905,5 Ω/w.mm (18 à 150 ohm/sq/mil).

9. Une composition selon l'une quelconque des revendications 1 à 8 ayant une valeur ohmique variant de moins de ±1,0% à 85% d'humidité relative.

10. Une composition selon l'une quelconque des revendications 1 à 8 ayant une valeur de la résistance qui varie de moins de ±1,0% lorsque l'humidité relative varie de 80% à 90% à 85°C.

11. Un procédé pour former, sur un substrat, une composition comme revendiqué dans l'une quelconque des revendications 1 à 10, caractérisé en ce qu'il comprend:

(i) la dissolution d'une résine phénolique solide ayant un poids moléculaire moyen numérique de 400 à 500 dans un solvant pour former une solution;

(ii) le mélange de ladite solution avec une résine phénolique liquide ayant un poids moléculaire moyen numérique de 300 à 400;

(iii) la dispersion d'un mélange de particules de noir de carbone et de graphite dans la solution pour former un mélange;

(iv) l'application du mélange à un substrat par sérigraphie; et

(v) le durcissement du mélange, par exemple à une température d'environ 150°C à 165°C pendant environ 60 à environ 120 minutes.

12. Un article comprenant un substrat, par exemple une plaque à circuit imprimé, dont au moins une portion de la surface est revêtue d'une composition comme revendiqué dans l'une quelconque des revendications 1 à 10.